# EUROPÄISCHE PATENTSCHRIFT

(11) **EP 0 676 141 B1**
(45) Veröffentlichungstag und Bekanntmachung des Hinweises auf die Patenterteilung: **30.12.1998**
(21) Anmeldenummer: 95103562.5
(22) Anmeldetag: 13.03.1995
(51) Int. Cl.: A21C 11/10, A21C 9/06

(54) **Vorrichtung zum Herstellen von gefüllten Esswaren sowie Verwendung der Vorrichtung**
Device and method for production of filled, edible products
Appareil et procédé de production des produits alimentaires farcis

(30) Priorität: 08.04.1994 CH 1051/94
(43) Veröffentlichungstag der Anmeldung: 11.10.1995
(73) Patentinhaber: Betty Bossi Verlag AG, 8002 Zürich (CH)
(72) Erfinder: Fetz, Peter, CH-8004 Zürich (CH)
(74) Vertreter: EGLI-EUROPEAN PATENT ATTORNEYS

(56) Entgegenhaltungen:
- DE-U- 8 608 827
- FR-A- 2 192 444
- US-A- 2 714 861
- US-A- 3 026 822
- US-A- 4 516 923

## Beschreibung

Die Erfindung betrifft eine Vorrichtung zum Herstellen von gefüllten Esswaren nach dem Oberbegriff von Anspruch 1.

Eine solche Vorrichtung ist aus US-A-4 516 923 bekannt zum Herstellen von ravioliähnlichen Esswaren.

Die bekannten Vorrichtungen haben unter anderem den Nachteil, dass sie das Zupressen und Schneiden der einzelnen Esswaren nicht immer zufriedenstellend verrichten.

Der Erfindung liegt die Aufgabe zugrunde, eine gattungsgemässe Vorrichtung zu schaffen, welche einfach in der Handhabung und geeignet für den Haushalt ist, in einem Arbeitsgang mehrere gefüllte Esswaren herstellt und ein zuverlässiges Zupressen und Schneiden der einzelnen Esswaren gewährleistet.

Die genannte Aufgabe wird erfindungsgemäss dadurch gelöst, dass die Vorrichtung einen ersten Formteil mit einer ersten Reihe von mit Randstegen versehenen Formaussparungen aufweist sowie einen um eine Achse gegen den ersten Formteil zuklappbaren zweiten Formteil mit einer der ersten Reihe zugeordneten zweiten Reihe von mit entsprechend angeordneten Randstegen versehenen entsprechend angeordneten Formaussparungen, wobei die Randstege von einem der beiden Formteile mit Schnittkanten versehen sind und die senkrecht zur Achse verlaufenden Randstege von einem der beiden Formteile konvex ausgebildet sind, und der zweite Formteil derart am ersten Formteil lagerbar ist, dass der zweite Formteil in der zugeklappten Stellung mittels der konvexen Randstege über den ersten Formteil hin und her rollbar ist.

Die Erfindung betrifft weiter die Verwendung der Vorrichtung zum Herstellen von gefüllten Esswaren aus einem flexiblen, im wesentlichen flachen Aussenmaterial und einer Füllung. Diese Verwendung ist erfindungsgemäss dadurch gekennzeichnet, dass folgende Schritte ausgeführt werden:
a) die Vorrichtung wird in die aufgeklappte Stellung gebracht;
b) das Aussenmaterial wird in die beiden Reihen von Formaussparungen eingebracht;
c) die Füllung wird in die Formaussparungen des ersten Formteils auf das Aussenmaterial aufgebracht;
d) die Vorrichtung wird in die zugeklappte Stellung gebracht, wobei das in die Formaussparungen des zweiten Formteils eingebrachte Aussenmaterial auf die Füllung in den jeweils entsprechenden Formaussparungen des ersten Formteils aufgebracht wird;
e) der zweite Formteil wird mittels der konvexen Randstege über den ersten Formteil hin und her gerollt, so dass die jeweils entsprechenden Randstege der beiden Formteile die zwei Schichten des Aussenmaterials zupressen und die Schnittkanten die gefüllten Esswaren schneiden.

Vorteilhafte Weiterbildungen der Erfindung ergeben sich aus den Unteransprüchen.

Ein Ausführungsbeispiel der Erfindung ist nachstehend anhand der Zeichnungen näher erläutert. Es zeigen
- Fig. 1A: eine Draufsicht eines erfindungsgemässen ersten Formteils,
- Fig. 1B: eine Seitenansicht (in der Figur 1A von rechts aus gesehen) des ersten Formteils,
- Fig. 1C: eine Seitenansicht (in der Figur 1A von links aus gesehen) des ersten Formteils,
- Fig. 1D: eine Seitenansicht (in der Figur 1A von unten aus gesehen) des ersten Formteils,
- Fig. 1E: einen Querschnitt des ersten Formteils,
- Fig. 2A: eine Unteransicht eines erfindungsgemässen zweiten Formteils,
- Fig. 2B: eine Draufsicht des zweiten Formteils,
- Fig. 2C: eine Seitenansicht (in der Figur 2B von unten aus gesehen) des zweiten Formteils und
- Fig. 2D: einen Querschnitt des zweiten Formteils.

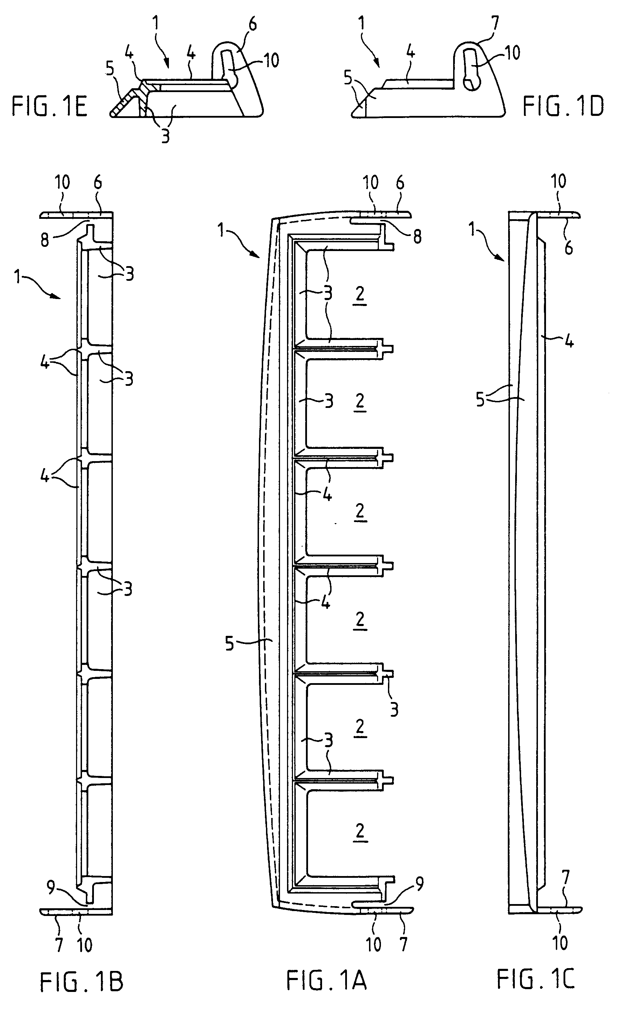

In der Figur 1A ist eine Draufsicht eines erfindungsgemässen ersten Formteils wiedergegeben. Der erste Formteil 1 weist eine erste Reihe (in diesem Fall sechs Stück) von mit Randstegen 3 versehenen Formaussparungen 2 auf. Die Formaussparungen 2 können an ihrer Unterseite durch eine Grundplatte begrenzt sein. In der gezeigten Ausführungsform sind die Formaussparungen 2 jedoch nur durch die Randstege 3 begrenzte Öffnungen, welche im Gebrauch durch die Arbeitsfläche, auf der die Vorrichtung gestellt wird, nach unten begrenzt sind. Die Randstege 3 vom ersten Formteil 1 sind mit Schnittkanten 4 versehen, welche vorzugsweise im Querdurchschnitt dreieckig ausgebildet sind und einen Schnittwinkel von ungefähr 60° aufweisen. Ein Aussenrand 5 dient zur Verstärkung und Stabilisierung des ersten Formteils 1.

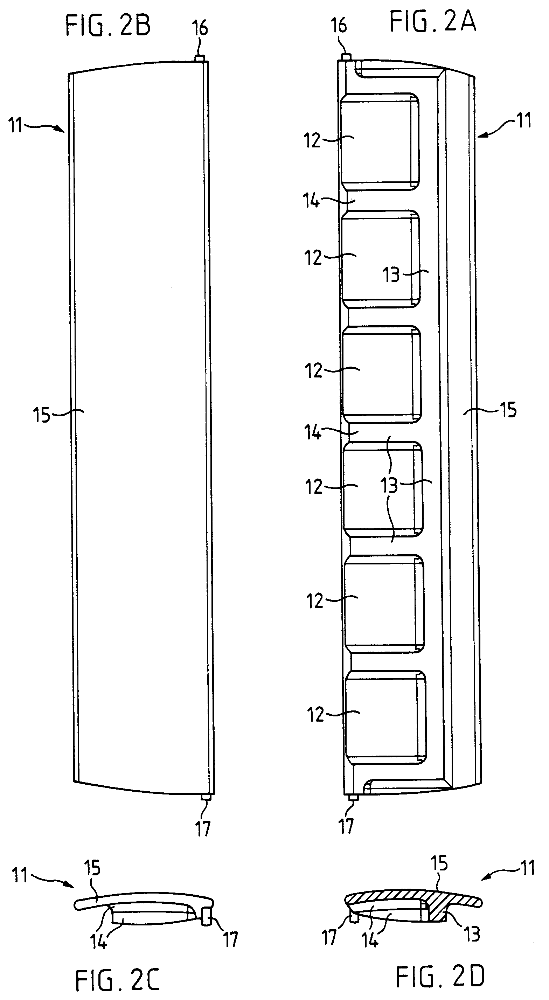

Weiterhin sind zwei Endstege 6, 7 zur drehbaren Lagerung eines zweiten Formteils (siehe Figur 2A) um eine Achse vorgesehen. Diese Endstege 6, 7 sind je neben einer Biegungsnute 8 bzw. 9 leicht federnd angeordnet, so dass der zweite Formteil einfach durch Einschnappen am ersten Formteil 1 lagerbar und auch wieder lösbar ist. Die Endstege 6, 7 des ersten Formteils 1 weisen je eine Lagerungsöffnung 10 auf, welche die Achse definieren, um die die beiden Formteile gegeneinander verdrehbar (auf- und zuklappbar) sind, wie im folgenden beschrieben wird.

Die Figur 1B zeigt den ersten Formteil 1 in einer Seitenansicht (in der Figur 1A von rechts aus gesehen).

Die Figur 1C zeigt den ersten Formteil 1 in einer weiteren Seitenansicht (in der Figur 1A von links aus gesehen).

In der Figur 1D ist eine weitere Seitenansicht (in der Figur 1A von unten aus gesehen) des ersten Formteils 1 wiedergegeben. Die Lagerungsöffnungen 10 der Endstege 6, 7 des ersten Formteils 1 weisen je im Durchschnitt senkrecht zur Achsenrichtung einen sich kreisflächenförmig um die Achse erstreckenden Öffnungsteil zur drehbaren Lagerung des zweiten Formteils auf sowie einen verengten, länglichen Öffnungsteil zur rollbaren Lagerung des zweiten Formteils in zugeklappter Stellung. Der längliche Öffnungsteil ist im wesentlichen zykloidringsektorförmig (d. h. ein in diesen Öffnungsteil geführter Lagerungsteil beschreibt eine zykloidförmige Bahn), so dass eine schlupffreie Rollbewegung des zweiten Formteils möglich ist, wie im Zusammenhang mit den Figuren 2A bis 2D beschrieben wird.

Die Figur 1E zeigt einen Querschnitt (schraffiert wiedergegeben) des ersten Formteils 1. Der schraffierte Randsteg 3 mit der Schnittkante 4 verläuft in Achsenrichtung. Der Aussenrand 5 ist als leicht gekrümmter Steg ausgeführt (siehe Figur 1A). Zur Verdeutlichung sind auch der Endsteg 6 mit der Lagerungsöffnung 10 sowie ein weiterer Randsteg 3 mit einer Schnittkante 4 im Hintergrund gezeigt. Vorzugsweise liegen die Achse und die Schnittflächen der Schnittkanten 4 in einer Ebene. Es hat sich herausgestellt, dass die Vorrichtung so optimal funktioniert.

In der Figur 2A ist eine Unteransicht eines erfindungsgemässen zweiten Formteils wiedergegeben. Der zweite Formteil 11 weist eine der ersten Reihe zugeordnete zweite Reihe von mit entsprechend angeordneten Randstegen 13 versehenen, entsprechend angeordneten Formaussparungen 12 auf. Die Formaussparungen 12 sind an ihrer Oberseite durch eine Deckelplatte 15 begrenzt (siehe auch Fig. 2B). Im montierten Zustand ist der zweite Formteil 11 um die obenerwähnte Achse gegen den ersten Formteil 1 verdrehbar (auf- und zuklappbar) gelagert. Im zugeklappten Zustand liegen die Randstege 13 jeweils auf den entsprechenden Randstegen 3 auf. Dabei schliessen die Formaussparungen 12 jeweils bei den entsprechenden Formaussparungen 2 des ersten Formteils 1 an zur Bildung von sechs Schablonen für die herzustellenden, gefüllten Esswaren.

Die senkrecht zur Achse verlaufenden Randstege 14 vom zweiten Formteil 11 sind konvex ausgebildet (siehe Figuren 2C, 2D). Der zweite Formteil 11 ist derart am ersten Formteil 1 lagerbar, dass der zweite Formteil 11 in der zugeklappten Stellung mittels der konvexen Randstege 14 über den ersten Formteil 1 hin und her rollbar ist, wie im folgenden erläutert wird. Die Randstege 13, 14 sind an der Deckelplatte 15 angeordnet, welche auch als obere Begrenzung der Formaussparungen 12 dient. Der zweite Formteil 11 ist mit Lagerungsteilen 16, 17 zur Aufnahme in die entsprechenden Lagerungsöffnungen 10 der Endstege 6, 7 des ersten Formteils 1 versehen.

Die Figur 2B zeigt eine Draufsicht des zweiten Formteils 11 mit der Deckelplatte 15 und den Lagerungsteilen 16, 17.

Die Figur 2C zeigt eine Seitenansicht (in der Figur 2B von unten aus gesehen) des zweiten Formteils 11. Die Lagerungsteile 16, 17 sind im Durchschnitt senkrecht zur Achsenrichtung länglich ausgebildet, wobei die Länge dem Durchmesser des kreisflächenförmigen Öffnungsteils der Lagerungsöffnungen 10 und die Breite der Breite des verengten, länglichen Öffnungsteils der Lagerungsöffnungen 10 entspricht. Die Lagerungsteile 16, 17 sind derart angeordnet, dass sie in der zugeklappten Stellung der Vorrichtung in den verengten, länglichen Öffnungsteil der Lagerungsöffnungen 10 führbar sind. So sind die Lagerungsteile 16, 17 im montierten Zustand im kreisflächenförmigen Öffnungsteil drehbar und, in der zugeklappten Stellung der Vorrichtung, im verengten, länglichen Öffnungsteil hin und her schiebbar, welche Schiebebewegung einem Hin- und Herrollen des zweiten Formteils 11 über den ersten Formteil 1 entspricht.

In der Figur 2D ist ein Querschnitt (schraffiert gezeichnet) des zweiten Formteils 11 wiedergegeben. Der schraffierte Randsteg 13 verläuft in Achsenrichtung. Die Deckelplatte 15 ist leicht gekrümmt ausgeführt. Zur Verdeutlichung sind auch der Lagerungsteil 17 sowie ein weiterer Randsteg 14 im Hintergrund gezeigt.

In aufgeklappter Stellung sind die senkrecht zur Achse verlaufenden Randstege 3 des ersten und 14 des zweiten Formteils um ungefähr 135° gegeneinander verdreht. Dies ermöglicht das einfache Einbringen der in der Vorrichtung zu verarbeitenden Esswaren.

Vorzugsweise schliessen in aufgeklappter Stellung die senkrecht zur Achse verlaufenden Randstege 3 des ersten Formteils 1 im Bereich der Achse eng zu den jeweils entsprechenden Randstegen 14 des zweiten Formteils 11 an. Somit kann ein flexibles, flaches Aussenmaterial für die herzustellenden Esswaren problemlos gleichzeitig auf die beiden Formteile 1 und 11 aufgebracht werden.

Auch in zugeklappter Stellung schliessen die senkrecht zur Achse verlaufenden Randstege 3 des ersten Formteils 1 im Bereich der Achse eng zu den jeweils entsprechenden Randstegen 14 des zweiten Formteils 11 an. Dadurch sind zusätzliche, in Achsenrichtung verlaufende Randstege im Bereich der Achse sowohl beim ersten Formteil 1 als beim zweiten Formteil 11 überflüssig.

Vorzugsweise bestehen die beiden Formteile 1, 11 aus lebensmittelgerechtem Kunststoff. Ausserdem sind sie spülmaschinengeeignet.

Die Vorrichtung wird zum Herstellen von gefüllten Esswaren, wie zum Beispiel Teigtaschen, aus einem flexiblen, im wesentlichen flachen Aussenmaterial (Blätterteig, Kuchenteig, Hefeteig, Mürbeteig, Nudelteig usw.) und einer Füllung (Schokolade, Mandel-Nussgipfelmasse, Früchte, Fleisch, Fisch, Gemüse, Käse, Pesto usw.) wie folgt verwendet: Zuerst wird die Vorrichtung in die aufgeklappte Stellung gebracht. Dann wird das Aussenmaterial in die beiden Reihen von Formaussparungen 2, 12 eingebracht. Die Füllung wird in die Formaussparungen 2 des ersten Formteils 1 auf das Aussenmaterial aufgebracht. Jetzt wird die Vorrichtung in die zugeklappte Stellung gebracht, wobei das in die Formaussparungen 12 des zweiten Formteils 11 eingebrachte Aussenmaterial auf die Füllung in den jeweils entsprechenden Formaussparungen 2 des ersten Formteils 1 aufgebracht wird. Schliesslich wird der zweite Formteil 11 mittels der konvexen Randstege 14 über den ersten Formteil 1 hin und her gerollt, so dass die jeweils entsprechenden Randstege 3, 13 bzw. 14 der beiden Formteile 1, 11 die zwei Schichten des Aussenmaterials zupressen und die Schnittkanten 4 die fertigen gefüllten Esswaren schneiden.

## Patentansprüche

1. Vorrichtung zum Herstellen von gefüllten Esswaren wobei die Vorrichtung einen ersten Formteil (1) mit einer ersten Reihe von mit Randstegen (3) versehenen Formaussparungen (2) aufweist sowie einen um eine Achse gegen den ersten Formteil (1) zuklappbaren zweiten Formteil (11) mit einer der ersten Reihe zugeordneten zweiten Reihe von mit entsprechend angeordneten Randstegen (13) versehenen entsprechend angeordneten Formaussparungen (12), wobei die Randstege von einem der beiden Formteile (1; 11) mit Schnittkanten (4) versehen sind **dadurch gekennzeichnet, dass** die senkrecht zur Achse verlaufenden Randstege von einem der beiden Formteile (1; 11) konvex ausgebildet sind, und der zweite Formteil (11) derart am ersten Formteil (1) lagerbar ist, dass der zweite Formteil (11) in der zugeklappten Stellung mittels der konvexen Randstege (14) über den ersten Formteil (1) hin und her rollbar ist.

2. Vorrichtung nach Anspruch 1, **dadurch gekennzeichnet, dass** der erste Formteil (1) mit zwei Endstegen (6, 7) zur Lagerung des zweiten Formteils (11) versehen ist, welche je eine Lagerungsöffnung (10) aufweisen, die im Durchschnitt senkrecht zur Achsenrichtung einen sich kreisflächenförmig um die Achse erstreckenden Öffnungsteil zur drehbaren Lagerung des zweiten Formteils (11) umfasst sowie einen verengten, länglichen Öffnungsteil zur rollbaren Lagerung des zweiten Formteils (11) in zugeklappter Stellung, welcher zweite Formteil (11) mit Lagerungsteilen (16, 17) zur Aufnahme in die entsprechenden Lagerungsöffnungen (10) versehen ist, welche Lagerungsteile (16, 17) im Durchschnitt senkrecht zur Achsenrichtung länglich ausgebildet sind, wobei die Länge dem Durchmesser des kreisflächenförmigen Öffnungsteils und die Breite der Breite des länglichen Öffnungsteils entspricht, und diese Lagerungsteile (16, 17) derart angeordnet sind, dass sie in zugeklappter Stellung in den verengten, länglichen Öffnungsteil führbar sind.

3. Vorrichtung nach Anspruch 2, **dadurch gekennzeichnet, dass** die Endstege (6, 7) des ersten Formteils (1) je neben einer Biegungsnute (8, 9) leicht federnd angeordnet sind, so dass der zweite Formteil (11) lösbar am ersten Formteil (1) lagerbar ist.

4. Vorrichtung nach einem der Ansprüche 1 bis 3, **dadurch gekennzeichnet, dass** die Schnittkanten (4) im Querdurchschnitt dreieckig ausgebildet sind und einen Schnittwinkel von ungefähr 60° aufweisen.

5. Vorrichtung nach einem der Ansprüche 1 bis 4, **dadurch gekennzeichnet, dass** die Randstege (3) vom ersten Formteil (1) mit den Schnittkanten (4) versehen sind und die Achse und die Schnittflächen der Schnittkanten (4) in einer Ebene liegen.

6. Vorrichtung nach einem der Ansprüche 1 bis 5, **dadurch gekennzeichnet, dass** die senkrecht zur Achse verlaufenden Randstege (14) vom zweiten Formteil (11) konvex ausgebildet sind.

7. Vorrichtung nach einem der Ansprüche 1 bis 6, **dadurch gekennzeichnet, dass** die senkrecht zur Achse verlaufenden Randstege (3; 14) des ersten (1) und des zweiten (11) Formteils in aufgeklappter Stellung um ungefähr 135° gegeneinander verdreht sind.

8. Vorrichtung nach einem der Ansprüche 1 bis 7, **dadurch gekennzeichnet, dass** in aufgeklappter Stellung die senkrecht zur Achse verlaufenden Randstege (3) des ersten Formteils (1) im Bereich der Achse eng zu den jeweils entsprechenden Randstegen (14) des zweiten Formteils (11) anschliessen.

9. Vorrichtung nach einem der Ansprüche 1 bis 8, **dadurch gekennzeichnet, dass** in zugeklappter Stellung die senkrecht zur Achse verlaufenden Randstege (3) des ersten Formteils (1) im Bereich der Achse eng zu den jeweils entsprechenden Randstegen (14) des zweiten Formteils (11) anschliessen.

10. Vorrichtung nach einem der Ansprüche 1 bis 9, **dadurch gekennzeichnet, dass** die beiden Formteile (1, 11) aus lebensmittelgerechtem Kunststoff bestehen und spülmaschinengeeignet sind.

11. Verwendung der Vorrichtung nach einem der Ansprüche 1 bis 10 zum Herstellen von gefüllten Esswaren aus einem flexiblen, im wesentlichen flachen Aussenmaterial und einer Füllung, **dadurch gekennzeichnet, dass** folgende Schritte ausgeführt werden:
a) die Vorrichtung wird in die aufgeklappte Stellung gebracht;
b) das Aussenmaterial wird in die beiden Reihen von Formaussparungen (2, 12) eingebracht;
c) die Füllung wird in die Formaussparungen (2) des ersten Formteils (1) auf das Aussenmaterial aufgebracht;
d) die Vorrichtung wird in die zugeklappte Stellung gebracht, wobei das in die Formaussparungen (12) des zweiten Formteils (11) eingebrachte Aussenmaterial auf die Füllung in den jeweils entsprechenden Formaussparungen (2) des ersten Formteils (1) aufgebracht wird;
e) der zweite Formteil (11) wird mittels der konvexen Randstege (14) über den ersten Formteil (1) hin und her gerollt, so dass die jeweils entsprechenden Randstege (3, 13) der beiden Formteile (1, 11) die zwei Schichten des Aussenmaterials zupressen und die Schnittkanten (4) die gefüllten Esswaren schneiden.

## Claims

1. Device for the production of filled edible products, the device having a first moulding (1) with a first series of shaping recesses (2) provided with edge webs (3) as well as a second moulding (11) capable of being folded shut relative to the first moulding (1) about an axis and having a second series, assigned to the first series, of correspondingly arranged shaping recesses (12) provided with correspondingly arranged edge webs (13), the edge webs of one of the two mouldings (1; 11) being provided with cutting faces (4), characterized in that the edge webs of one of the two mouldings (1; 11), the said edge webs running perpendicularly to the axis, are designed convexly, and the second moulding (11) can be mounted on the first moulding (1) in such a way that the second moulding (11), in the folded-shut position, can be rolled back and forth over the first moulding (1) by means of the convex edge webs (14).

2. Device according to Claim 1, characterized in that the first moulding (1) is provided with two end webs (6, 7) for mounting the second moulding (11), the said end webs each having a mounting orifice (10) which, in a cross-section perpendicular to the axial direction, comprises an orifice part extending in the form of a circular area about the axis, for the rotatable mounting of the second moulding (11), as well as a narrow elongate orifice part for the rollable mounting of the second moulding (11) in the folded-shut position, the said second moulding (11) being provided with mounting parts (16, 17) for being received in the corresponding mounting orifices (10), the said mounting parts (16, 17) having an elongate design, as seen in a cross-section perpendicular to the axial direction, the length corresponding to the diameter of the orifice part in the form of a circular area and the width corresponding to the width of the elongate orifice part, and these mounting parts (16, 17) being arranged in such a way that, in the folded-shut position, they can be guided in the narrowed elongate orifice part.

3. Device according to Claim 2, characterized in that the end webs (6, 7) of the first moulding (1) are each arranged slightly resiliently next to a bending slot (8, 9), so that the second moulding (11) can be mounted releasably on the first moulding (1).

4. Device according to one of Claims 1 to 3, characterized in that the cutting faces (4) are of triangular design, as seen in cross-section, and have a cutting angle of approximately 60°.

5. Device according to one of Claims 1 to 4, characterized in that the edge webs (3) of the first moulding (1) are provided with the cutting faces (4) and the axis and the cutting surfaces of the cutting faces (4) lie in one plane.

6. Device according to one of Claims 1 to 5, characterized in that the edge webs (14) of the second moulding (11) which run perpendicularly to the axis are designed convexly.

7. Device according to one of Claims 1 to 6, characterized in that, in the folded-open position, the edge webs (3; 14) of the first (1) and of the second (11) moulding, the said edge webs running perpendicularly to the axis, are rotated through approximately 135° relative to one another.

8. Device according to one of Claims 1 to 7, characterized in that, in the folded-open position, the edge webs (3) of the first moulding (1) which run perpendicularly to the axis are closely adjacent, in the region of the axis, to the respectively corresponding edge webs (14) of the second moulding (11).

9. Device according to one of Claims 1 to 8, characterized in that, in the folded-shut position, the edge webs (3) of the first moulding (1) which run perpendicularly to the axis are closely adjacent, in the region of the axis, to the respectively corresponding edge webs (14) of the second moulding (11).

10. Device according to one of Claims 1 to 9, characterized in that the two mouldings (1, 11) consist of food-safe plastic and are suitable for dishwashers.

11. Use of the device according to one of Claims 1 to 10 for the production of filled edible products consisting of a flexible essentially flat outer material and of a filling, characterized in that the following steps are carried out:
a) the device is brought into the folded-open position;
b) the outer material is introduced into the two series of shaping recesses (2, 12);
c) the filling is applied to the outer material into the shaping recesses (2) of the first moulding (1);
d) the device is brought into the folded-shut position, the outer material introduced into the shaping recesses (12) of the second moulding (11) being applied to the filling in the respectively corresponding shaping recesses (2) of the first moulding (1);
e) the second moulding (11) is rolled back and forth over the first moulding (1) by means of the convex edge webs (14), so that the respectively corresponding edge webs (3, 13) of the two mouldings (1, 11) press shut the two layers of the outer material and the cutting faces (4) cut the filled edible products.

## Revendications

1. Dispositif pour la fabrication de produits alimentaires farcis, dans lequel le dispositif présente une première partie de moule (1) comportant une première série d'évidements de moulage (2) munis de nervures marginales (3), ainsi qu'une deuxième partie de moule (11) susceptible de se rabattre autour d'un axe contre la première partie de moule (1), comprenant une deuxième série, correspondant à la première série, d'évidements de moulage (12) disposés de manière correspondante et munis de nervures marginales (13) disposées de manière correspondante, les nervures marginales d'une des deux parties de moule (1; 11) étant munies d'arêtes de coupe (4), caractérisé en ce que les nervures marginales d'une des deux parties de moule (1; 11), s'étendant perpendiculairement à l'axe, sont réalisées sous forme convexe, et la deuxième partie de moule (11) peut être montée sur la première partie de moule (1) de telle sorte que la deuxième partie de moule (11) dans la position rabattue est à même de rouler en va-et-vient pardessus la première partie de moule (1) via les nervures marginales convexes (14).

2. Dispositif selon la revendication 1, caractérisé en ce que la première partie de moule (1) est munie de deux nervures terminales (6, 7) pour le montage de la deuxième partie de moule (11), qui présentent respectivement une ouverture de montage (10) qui comprend, en section transversale perpendiculairement à la direction axiale, une partie d'ouverture s'étendant autour de l'axe en forme d'aire de cercle, pour le montage en rotation de la deuxième partie de moule (11), ainsi qu'une partie d'ouverture oblongue rétrécie pour le montage en roulement de la deuxième partie de moule (11) dans la position rabattue, ladite deuxième partie de moule (11) étant munie de parties de montage (16, 17) destinées à venir s'insérer dans les ouvertures de montage (10) correspondantes, lesdites parties de montage (16, 17) étant réalisées sous forme oblongue, en section transversale perpendiculairement à la direction axiale, la longueur correspondant au diamètre de la partie d'ouverture en forme d'air de cercle et la largeur correspondant à la largeur de la partie d'ouverture oblongue, ces parties de montage (16, 17) étant disposées de telle sorte qu'elles sont à même d'être guidées dans la position rabattue dans la partie d'ouverture oblongue rétrécie.

3. Dispositif selon la revendication 2, caractérisé en ce que les nervures terminales (6, 7) de la première partie de moule (1) sont disposées respectivement de façon à manifester une élasticité aisée, à côté d'une rainure de flexion (8, 9), si bien que la deuxième partie de moule (11) peut être montée de manière amovible sur la première partie de moule (1).

4. Dispositif selon l'une quelconque des revendications 1 à 3, caractérisé en ce que les arêtes de coupe (4) sont réalisées sous forme triangulaire en section transversale et présentent un angle de coupe d'environ 60°.

5. Dispositif selon l'une quelconque des revendications 1 à 4, caractérisé en ce que les nervures marginales (3) de la première partie de moule (1) sont munies des arêtes de coupe (4), l'axe et les surfaces de coupe des arêtes de coupe (4) se trouvant dans un seul et même plan.

6. Dispositif selon l'une quelconque des revendications 1 à 5, caractérisé en ce que les nervures marginales (14) de la deuxième partie de moule (11), s'étendant perpendiculairement à l'axe, sont réalisées sous forme convexe.

7. Dispositif selon l'une quelconque des revendications 1 à 6, caractérisé en ce que les nervures marginales (3; 14) de la première partie de moule (1) et de la deuxième partie de moule (11), s'étendant perpendiculairement à l'axe, ont effectué, dans la position ouverte, une rotation réciproque d'environ 135°.

8. Dispositif selon l'une quelconque des revendications 1 à 7, caractérisé en ce que, dans la position ouverte, les nervures marginales (3) de la première partie de moule (1) s'étendant perpendiculairement à l'axe sont, dans la zone de l'axe, étroitement contiguës aux nervures marginales (14) respectivement correspondantes de la deuxième partie de moule (11).

9. Dispositif selon l'une quelconque des revendications 1 à 8, caractérisé en ce que, dans la position rabattue, les nervures marginales (3) de la première partie de moule (1) s'étendant perpendiculairement à l'axe sont, dans la zone de l'axe, étroitement contiguës aux nervures marginales (14) respectivement correspondantes de la deuxième partie de moule (11).

10. Dispositif selon l'une quelconque des revendications 1 à 9, caractérisé en ce que les deux parties de moule (1, 11) sont constituées d'une matière synthétique qui convient pour des produits alimentaires et sont appropriées pour le lavage en machine.

11. Utilisation du dispositif selon l'une quelconque des revendications 1 à 10, pour la production de produits alimentaires farcis constitués d'une matière externe flexible essentiellement plate et d'une farce, caractérisée en ce qu'on met en oeuvre les étapes ci-après:
a) on amène le dispositif dans la position ouverte;
b) on introduit la matière externe dans les deux séries d'évidements de moulage (2, 12);
c) on applique la farce sur la matière externe dans les évidements de moulage (2) de la première partie de moule (1);
d) on amène le dispositif dans la position rabattue dans laquelle la matière externe introduite dans les évidements de moulage (12) de la deuxième partie de moule (11) vient s'appliquer sur la farce présente dans les évidements de moulage (2) respectivement correspondants de la première partie de moule (1);
e) on fait rouler en va-et-vient la deuxième partie de moule (11) via les nervures marginales convexes (14) par-dessus la première partie de moule (1), si bien que les nervures marginales respectivement correspondantes (3, 13) des deux parties de moules (1, 11) compriment les deux couches de la matière externe et les arêtes de coupe (4) découpent les produits alimentaires farcis.
